# EUROPÄISCHE PATENTSCHRIFT

(11) **EP 1 456 608 B1**
(45) Veröffentlichungstag und Bekanntmachung des Hinweises auf die Patenterteilung: **09.09.2015**
(21) Anmeldenummer: 02793055.1
(22) Anmeldetag: 18.12.2002
(51) Int. Cl.: G01F 1/66

(54) **PULSGENERATOR FÜR ULTRASCHALLDURCHFLUSSMESSGERÄTE**
PULSE GENERATOR
GENERATEUR D'IMPULSIONS

(30) Priorität: 21.12.2001 DE 10163566
(43) Veröffentlichungstag der Anmeldung: 15.09.2004
(73) Patentinhaber: Endress + Hauser Flowtec AG, 4153 Reinach (CH)
(72) Erfinder: FRÖHLICH, Thomas, CH-4142 Münchenstein (CH); STOCKER, Harald, 79650 Schopfheim (DE)
(74) Vertreter: Andres, Angelika Maria
(86) Internationale Anmeldenummer: PCT/EP2002/014442
(87) Internationale Veröffentlichungsnummer: WO 2003/054490

(56) Entgegenhaltungen:
- EP-A- 0 249 691
- GB-A- 2 266 373
- US-A- 4 114 439
- US-A- 4 164 865
- US-A- 4 367 654
- US-A- 4 417 481
- US-A- 6 112 601

## Beschreibung

Die Erfindung betrifft einen Pulsgenerator gemäß dem Oberbegriff des Anspruch 1.

Derartige Pulsgeneratoren werden vielfach in der Prozeßautomatisierungstechnik im Ultraschall- bzw. im Radarbereich verwendet.

Ultraschall-Durchflußmeßgeräte erlauben in einfacher Weise, den Volumendurchfluß in einer Rohrleitung berührungslos zu bestimmen.

Die bekannten Ultraschall-Durchflußmeßgeräte arbeiten entweder nach dem Doppler- oder nach dem Laufzeitdifferenz-Prinzip.

Beim Laufzeitdifferenz-Prinzip werden die unterschiedlichen Laufzeiten von Ultraschallimpulsen relativ zur Stömungsrichtung der Flüssigkeit ausgewertet.

Hierzu werden Ultraschallimpulse sowohl in wie auch entgegen der Strömung gesendet. Aus der Laufzeitdifferenz läßt sich die Fließgeschwindigkeit und damit bei bekanntem Durchmesser des Rohrleitungsabschnitts der Volumendurchfluß bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen läßt sich ebenfalls die Fließgeschwindigkeit der Flüssigkeit bestimmen.

Reflexionen in der Flüssigkeit treten jedoch nur auf, wenn Luftbläschen oder Verunreinigungen in dieser vorhanden sind, so daß dieses Prinzip hauptsächlich bei verunreinigten Flüssigkeiten Verwendung findet.

Die Ultraschallwellen werden mit Hilfe sogenannter Ultraschallwandler erzeugt bzw. empfangen. Hierfür sind Ultraschallwandler an der Rohrwandung des betreffenden Rohrleitungsabschnitts fest angebracht. Seit neuerem sind auch Clamp-on-Ultraschall-Meßsysteme erhältlich. Bei diesen Systemen werden die Ultraschallwandler nur noch mit einem Spannverschluß an die Rohrwandung gepreßt. Derartige Systeme sind z. B. aus der EP-B-686 255, US-A 44 84 478 oder US-A 45 98 593 bekannt

Ein weiteres Ultraschall-Durchflußmessgerät, das nach dem Laufzeitdifferenz-Prinzip arbeitet, ist aus der US-A 50 52 230 bekannt. Die Laufzeit wird hier mittels Bursts, das sind kurze Ultraschallimpulse, ermittelt.

Die Ultraschallwandler bestehen normalerweise aus einem Piezoelement und einem Koppelkeil. Im Piezoelement werden die Ultraschallwellen erzeugt und über den Koppelkeil zur Rohrwandung geführt und von dort in die Flüssigkeit geleitet.
Da die Schallgeschwindigkeiten in Flüssigkeiten und Kunststoffen unterschiedlich sind, werden die Ultraschallwellen beim Übergang von einem zum anderen Medium gebrochen. Der Brechungswinkel bestimmt sich nach dem Snell'schen Gesetz. Der Brechungswinkel ist somit abhängig von dem Verhältnis der Ausbreitungsgeschwindigkeiten in den beiden Medien.

Vielfach werden Ultraschalldurchflußmeßgeräte in explosionsgeschützten Bereichen eingesetzt. In diesen Bereichen sind zündfähige Gase vorhanden, deren Entzündung es zu vermeiden gilt. Für explosionsgeschützte Bereiche gibt es entsprechende Sicherheitsvorschriften um eine Gefährdung für Anlage und Personen auszuschließen. Zu einer Entzündung der Gase kann es kommen, wenn bestimmte nach aussen wirkende Spannungs- Strom- Induktivitäts- oder Kapazitätswerte überschritten werden und damit genügend Energie im Gas deponiert wird, die ausreicht um den Zündvorgang auszulösen.. Hohe Pulsspannungen sind für eine ausreichende Meßgenauigkeit notwendig. Bei zu kleinen Pulsspannungen ist die Signalauswertung äußerst schwierig. Ex-Bereiche werden entsprechend den bekannten Sicherheitsstandard in verschiedenen Zonen unterteilt, die unterschiedlichen Sicherheitskriterien unterliegen. Bei Fehlfunktionen der Steuerlogik mit der die Spannungsimpulse erzeugt werden, ist nicht auszuschließen, daß die Anzahl der Pulsperioden pro Burst zu gross wird, die Pulsfrequenz zu hoch wird oder die Burst Repetitionsrate zu hoch wird. In allen Fällen kann es zu einer Gasentzündung kommen. Der Fall, dass die Spannung der Spannungsversorgeeinheit dauernd am Ausgang ansteht muss ebenfalls verhindert werden.

Aufgabe der vorliegenden Erfindung ist es deshalb, einen Pulsgenerator insbesondere für Ultraschalldurchflußmeßgeräte zu schaffen, der eine sichere Anwendung auch im Ex-Bereich erlaubt.

Gelöst wird diese Aufgabe durch die im Anspruch 1 angegebenen Merkmale.

Vorteilhafte Weiterentwicklungen der Erfindung sind in den Unteransprüchen angegeben.

Die wesentliche Idee der Erfindung besteht darin, daß ein RC-Glied zwischen Spannungsversorgungseinheit und Schalter angeordnet ist, das die Pulsspannung verringert, wenn der Schalter mit einer zu hohen Repetitionsrate angesteuert wird und daß zwischen Steuerlogik und Schalter ein Kondensator angeordnet ist, der die Pulsspannung bei zu kleinen Pulsfrequenzen der Steuerimpulse verringert.

Nachfolgend ist die Erfindung anhand eines in der Zeichnung dargestellten Auswertungsbeispiels näher erläutert.
Es zeigen:
Figur 1 schematische Darstellung eines Ultraschalldurchflußmeßgeräts,
Figur 2 Schaltplan eines erfindungsgemäßen Pulsgenerators für Ultraschalldurchflußmeßgeräte in schematischer Darstellung,
Figur 3 Pulsspannungs-Zeitdiagramm für mehrere Einstellungen der Steuerlogik.

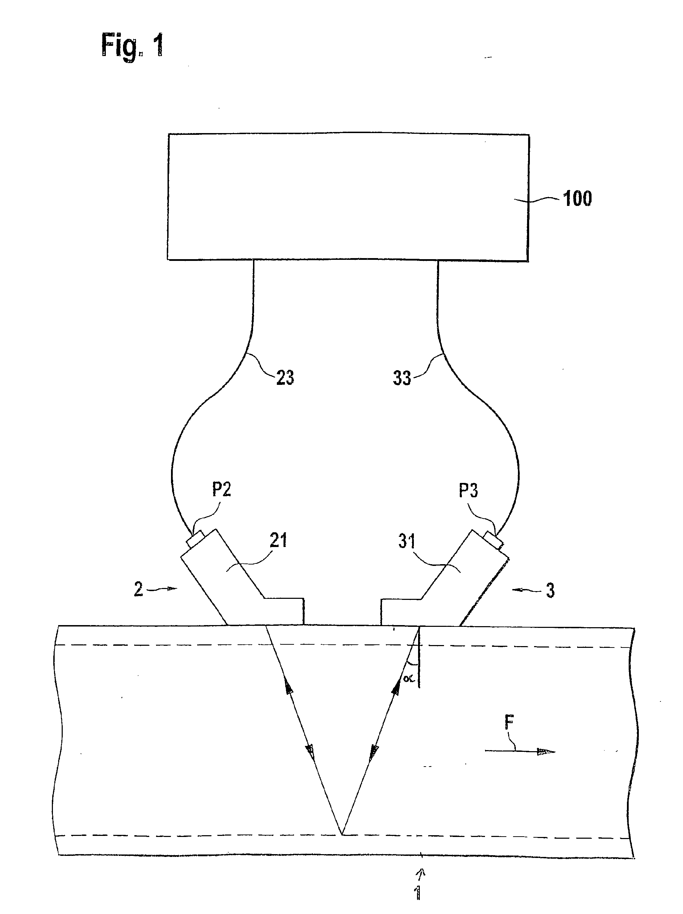

Fig. 1 zeigt in stark vereinfachter Darstellung ein Ultraschall-Durchflußmessgerät mit zwei Ultraschallwandlern 2, 3, die auf der Außenwandung einer Rohrleitung 1 achsparallel versetzt angeordnet sind. Die Flüssigkeit F in der Rohrleitung 1 fließt in Pfeilrichtung.

Dieses Wandlerpaar kann auf zwei unterschiedliche Weisen betrieben werden. Entweder wirkt der Ultraschallwandler 2 als Sendewandler und der Ultraschallwandler als 3 als Empfängerwandler oder der Ultraschallwandler 2 als Empfängerwandler und der Ultraschallwandler 3 als Sendewandler, wodurch abwechselnd in Strömungsrichtung bzw. entgegen der Strömungsrichtung gemessen wird.

Jeder der Ultraschallwandler 2 bzw. 3 besteht aus jeweils einem Piezoelement P2 bzw. P3 und jeweils einem Koppelelement 21 bzw. 31, das die Ultraschallsignale unter einem von 90° verschiedenen Winkel α entweder in die Wandung der Rohrleitung ein- bzw. auskoppelt werden. Der Winkel α wird so gewählt, das ein möglichst flacher Winkel im Medium entsteht und gleichzeitig eine Einkopplung des Ultraschalls in möglichst viele Rohrmaterialien ohne Totalreflexion möglich ist.

Die Piezoelemente P2, P3 wandeln entweder Ultraschallimpulse in mechanische Schwingungen, die eigentlichen Ultraschallsignale, oder umgekehrt mechanische Schwingungen in elektrische um.

Beide Ultraschallwandler 2,3 sind jeweils über Anschlußleitungen 23 bzw. 33 mit einer Meßschaltung 100, die einen Pulsgenerator umfaßt, verbunden. Über die Anschlußleitungen 23, 33 werden die elektrischen Impulse geführt.

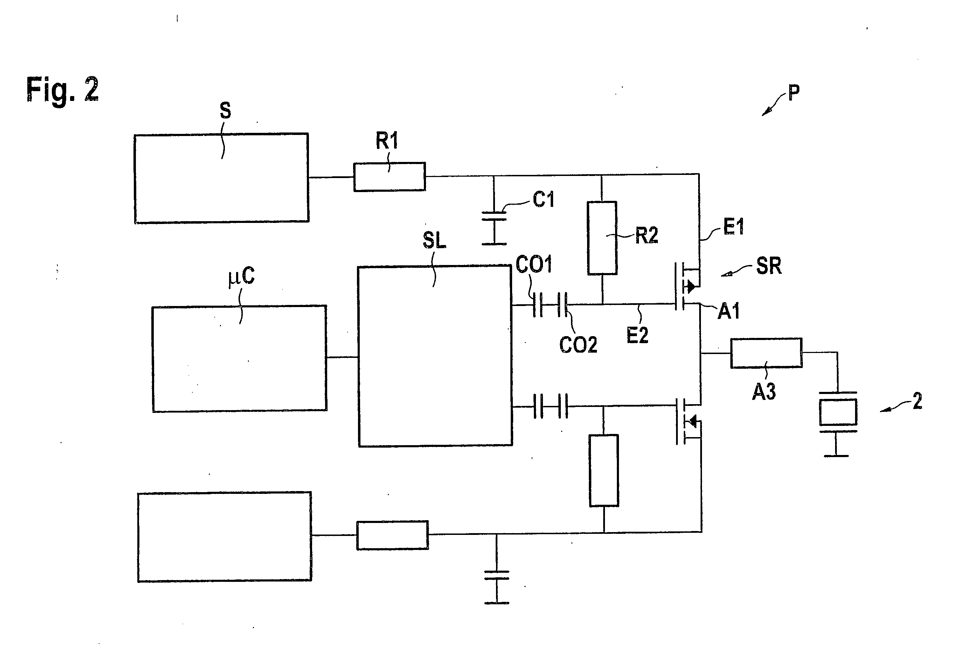

Die Spannungsimpulse, mit denen die Piezoelemente betrieben werden, werden mit Hilfe eines Pulsgenerators P erzeugt, der im wesentlichen aus einer Steuerlogik SL, einem Schalter SR und einer Spannungsversorgungseinheit S besteht (Fig. 2). Die Steuerlogik SL liefert die Steuersignale, mit denen der Schalter SR angesteuert wird. Durch Schließen und Öffnen des Schalters SR werden die Spannungsimpulse erzeugt. Die Amplitude der Pulsspannung ist im normalen Betriebszustand durch die Ausgangsspannung der Spannungsversorgungseinheit S gegeben.

Über die Steuerlogik SL läßt sich die Anzahl der Perioden pro Burst, die Pulsfrequenz und die Repetitionsrate der Bursts einstellen. Diese Einstellungen sind variabel und in einem Datensatz in der Steuerlogik SL abgespeichert. Die Einstellungen können mit Hilfe eines Mikroprozessor µC geändert werden.

Die Spannungsversorgungseinheit S ist über ein RC-Glied RC, bestehend aus Widerstand R1 und Kondensator C1, mit einem Eingang E1 eines Feldefekttransistors (FET), der als Schalter SR dient, verbunden. Weiterhin ist die Steuerlogik SL über zwei Kondensatoren C01 und C02 mit einem zweiten Eingang E2 des Feldeffekttransistors (FET) verbunden. Der Ausgang A1 des Feldeffekttransistors FET ist über einen Widerstand A3 mit dem Ultraschallwandler 2 verbunden. Der Ultraschallwandler 2 besteht im wesentlichen aus einem Piezoelement, welches mit zusätzlichen passiven oder aktiven Bauteilen (Widerständen, Induktivitäten, Dioden) beschaltet ist. Die Steuerlogik SL wird vom Mikroprozessor µC angesteuert.

Da der Pulsgenerator P bipolare Spannungspulse erzeugt ist der obere Teil der Schaltung spiegelbildlich vorhanden.

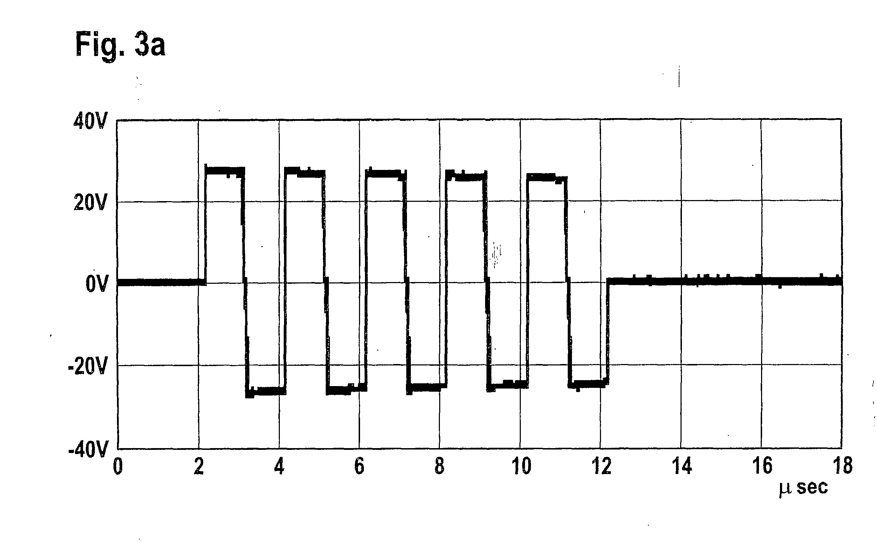

Nachfolgend ist die Funktion der Erfindung näher erläutert. Die Steuerlogik SL liefert die Steuerpulse mit denen der Schalter SRangesteuert wird. Die Steuerlogik SL ist im Normalfall so eingestellt, daß Spannungsimpulse als Bursts erzeugt werden mit einer Repetitionsrate von 1-10 Millisekunde und eine Pulsfrequenz von einigen hundert Kilohertz. In Figur 3a ist ein entsprechendes Pulsspannungs-ZeitDiagramm dargestellt. Die Pulsfrequenz beträgt hier 500 Kilohertz. Ein Burst besteht aus 5 Pulsen und die Repetitionsrate der Bursts beträgt 5 Millisekunden. Die Amplitude der Pulsspannung liegt bei 30 Volt, der Ausgangsspannung der spannungsversorgungseinheit S.

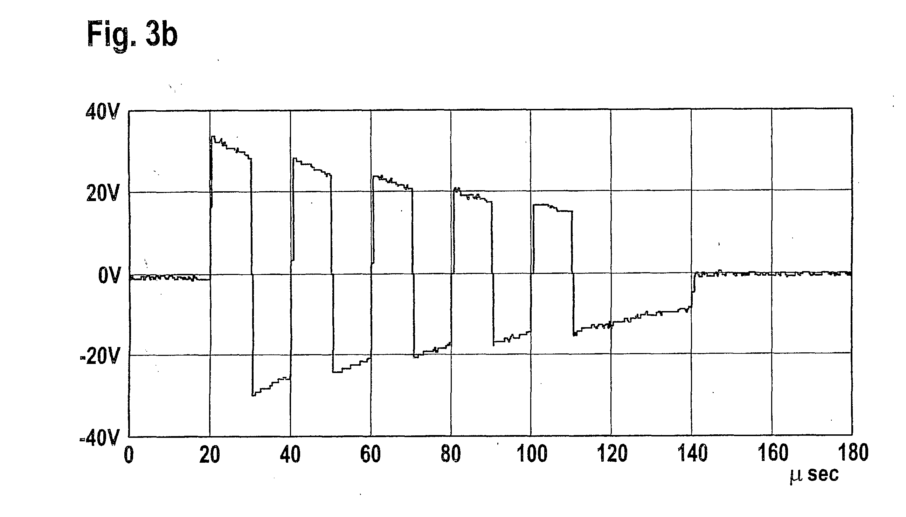

Eine mögliche Fehlfunktion der Steuerlogik SL kann dazu führen, daß die Pulsfrequenz zu klein wird. Ein derartiger Fall ist in Figur 3b dargestellt, hier beträgt die Pulsfrequenz nur noch 50 Kiloherz. Deutlich zu sehen ist, daß die Amplitude der Pulsspannung mit jedem einzelnen Puls stark abnimmt. Bereits nach 5 Pulsen ist die Pulsspannung auf mehr als die Hälfte des ursprünglichen Ausgangswertes abgesunken.

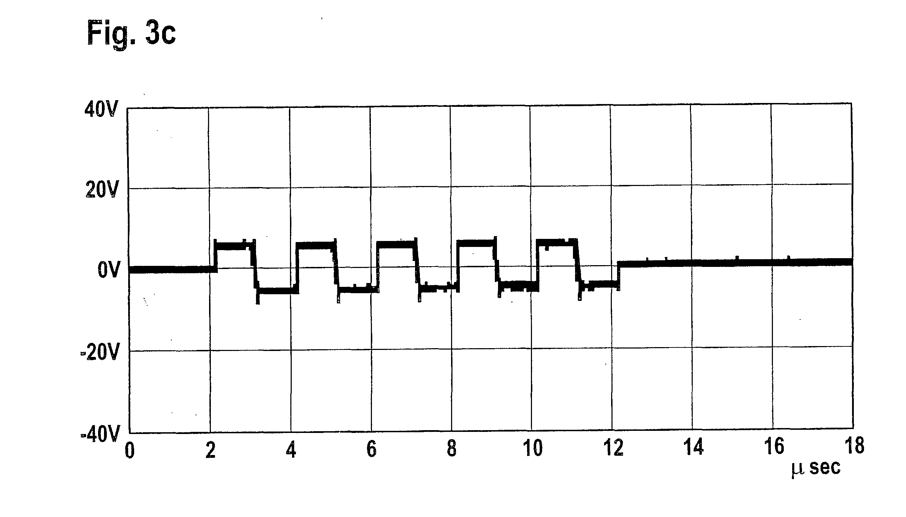

Eine weitere Fehlfunktion der Steuerlogik SL kann dazu führen, daß die Repetitionsrate zu hoch wird. Ein solcher Fall ist in Figur 3c dargestellt. Hier beträgt die Repetitionsrate 100 Mikrosekunden. Die Amplitude der Pulsspannung liegt nur noch bei ca. 5 Volt.

Mit Hilfe des erfindungsgemäßen Pulsgenerators P ist auch bei einer Fehlfunktion der Steuerlogik SL ein sicherer Betrieb auch in explosionsgeschützten Bereichen möglich.

Der erfindungsgemäße Pulsgenerator kann vielfach, nicht nur im Ultraschallbereich, sondern auch im Radarbereich etc. eingesetzt werden.

## Patentansprüche

1. Pulsgenerator P für Ultraschalldurchflussmessgeräte, bestehend aus einer Steuerlogik SL, die mittels Steuerimpulse einen Schalter SR ansteuert, welcher Schalter SR ein Feldeffekttransistor (FET) ist, der eingangsseitig mit einer Spannungsversorgungseinheit S verbunden ist und ausgangsseitig eine Pulsspannung liefert, **dadurch gekennzeichnet, daß** zwischen Steuerlogik SL und dem Schalter SR ein Kondensator C01 geschaltet ist, der die Pulsspannung bei zu kleinen Pulsfrequenzen der Steuerpulse verringert und daß zwischen Spannungsversorgungseinheit S und Schalter SR ein RC-Glied angeordnet ist, das die Pulsspannungen bei zu hohen Repetitionsraten der Steuerimpulse verringert, um den sicheren Betrieb in explosionsgeschützten Bereichen bei einer Fehlfunktion der Steueriogik SL zu ermöglichen.

2. Pulsgenerator nach Anspruch 1, **dadurch gekennzeichnet, daß** das RC-Glied eine Zeitkonstante aufweißt, die eine Zündung verunmöglicht

3. Pulsgenerator nach einem der vorgehenden Ansprüche, **dadurch gekennzeichnet, daß** zwei in Reihe geschaltete Kondensatoren C01 und C02 vorgesehen sind.

4. Pulsgenerator nach einem der vorhergehenden Ansprüche, **dadurch gekennzeichnet, dass** zur Strombegrenzung ein Ausgangswiderstand A3 dem Schalter SR nachgeschaltet ist

5. Pulsgenerator nach einem der vorhergehenden Ansprüche, **dadurch gekennzeichnet, dass** bipolare Spannungspulse erzeugt werden.

## Claims

1. Pulse generator P for ultrasonic flowmeters, consisting of a control logic unit SL, which controls a switch SR using control pulses, said switch SR being a field effect transistor (FET), which is connected on the input side with a power supply unit S and supplies a pulse voltage on the output side, **characterized in that** a capacitor C01 is switched between the control logic unit SL and the switch SR, said capacitor reducing the pulse voltage if the pulse frequencies of the control pulses are too low, and **in that** an RC element is arranged between the power supply unit S and the switch SR, said RC element reducing the pulse voltages if the repetition rates of the control pulses are too high in order to enable safe operation in explosion protected areas in the event of a malfunction of the control logic unit SL.

2. Pulse generator as claimed in Claim 1, **characterized in that** the RC element has a time constant which renders ignition impossible.

3. Pulse generator as claimed in one of the previous claims, **characterized in that** two capacitors C01 and C02, which are connected in series, are provided.

4. Pulse generator as claimed in one of the previous claims, **characterized in that** an output resistor A3 is located downstream from the switch SR for the purpose of current limitation.

5. Pulse generator as claimed in one of the previous claims, **characterized in that** bipolar voltage pulses are generated.

## Revendications

1. Générateur d'impulsions P pour débitmètres à ultrasons, constitué d'une logique de commande SL, qui pilote un interrupteur SR au moyen d'impulsions de commande, lequel interrupteur SR est un transistor à effet de champ (FET), dont l'entrée est reliée à une unité d'alimentation en tension S et dont la sortie délivre une tension pulsée, **caractérisé en ce qu'**entre la logique de commande SL et l'interrupteur SR est couplé un condensateur C01, qui diminue la tension pulsée en présence de fréquences trop petites des impulsions de commande et **en ce qu'**est disposé entre l'unité d'alimentation de tension S et l'interrupteur SR un circuit RC qui diminue les tensions pulsées en présence de taux de répétition trop élevés des impulsions de commande, afin de permettre le fonctionnement sûr au sein de zones protégées contre les explosions en cas de dysfonctionnement de la logique de commande SL.

2. Générateur d'impulsions selon la revendication 1, **caractérisé en ce que** le circuit RC présente une constante de temps rendant impossible un amorçage.

3. Générateur d'impulsions selon l'une des revendications précédentes, **caractérisé en ce que** sont prévus deux condensateurs C01 et C02 couplés en série.

4. Générateur d'impulsions selon l'une des revendications précédentes, **caractérisé en ce qu'**une résistance de sortie A3 est montée en aval de l'interrupteur SR en guise de limitation de courant.

5. Générateur d'impulsions selon l'une des revendications précédentes, **caractérisé en ce que** sont générées des impulsions de tension bipolaires.
